# EUROPEAN PATENT SPECIFICATION

(11) **EP 2 048 933 B1**
(45) Date of publication and mention of the grant of the patent: **27.02.2019**
(21) Application number: 07766475.3
(22) Date of filing: 01.08.2007
(51) Int. Cl.: A01D 69/02

(54) **LAWN-CARE APPARATUS**
RASENPFLEGEVORRICHTUNG
APPAREIL D'ENTRETIEN DE JARDIN

(30) Priority: 01.08.2006 GB 0615241
(43) Date of publication of application: 22.04.2009
(73) Proprietor: Robert Bosch GmbH, 70469 Stuttgart (DE)
(72) Inventor: COUSSINS, Adrian, Stowmarket Suffolk IP14 1EY (GB); HIRSCHBURGER, Wolfgang, 70469 Stuttgart (DE)
(86) International application number: PCT/GB2007/050463
(87) International publication number: WO 2008/015479

(56) References cited:
- EP-A- 0 966 011
- WO-A-2006/086412
- GB-A- 2 110 432
- US-A- 3 783 359
- US-A- 5 619 845
- US-A- 6 087 805
- US-A1- 2003 037 525
- US-A1- 2004 135 537
- US-A1- 2006 046 895

## Description

The present invention relates to a lawn-care apparatus, in particular to a vegetation cutting lawn care apparatus such as a lawnmower.

Lawn care apparatus are well known and typically comprise a cutting element or a raking or scarifying element. The element may be arranged to rotate about a generally vertical axis, such as in a rotary lawnmower, or about a horizontal axis, such as in a cylinder lawnmower or a scarifier. The element may be driven electrically or by means of a small petrol engine. The present invention is particularly concerned with electrically powered lawn care apparatus. An example of such an apparatus powered by a conventional battery is known from US 5 619 845 A1. In GB 2 110 432 A another lawn care apparatus with a brushless motor powered by a cable connected to a source of electricity is disclosed. A self-propelled mower whose cutting elements are driven by a brushless motor is known from WO 2006/086412 A2.

There is a need for a small lawn care apparatus that combines the efficiency of the brushless motor with mobility and easy maintenance.

To overcome the disadvantages of the prior art the invention proposes a lawn care apparatus with the features of claim 1.

Preferably, the battery unit comprises a lithium-ion battery. The battery unit is removable for charging. The battery compartment further comprises an openable battery cover. Preferably, the battery cover is hingedly attached.

The battery unit comprises engagement means comprising a plurality of grooves or ribs for slidable engagement with a complementary engagement means provided in or on the battery compartment. The battery compartment complementary engagement means comprises a plurality of ribs or grooves, complementary to those of the battery unit engagement means.

Advantageously, the apparatus further comprises a control system. Preferably, the control system comprises a speed control system. More preferably, the speed control system includes a feedback system to drive the electronically commutated motor at a substantially constant speed.

Preferably, the apparatus further comprises a battery-unit condition monitoring system. Preferably, the control system removes power to the motor in response to a signal from the battery-unit condition monitoring system. Suitably, the battery-unit condition monitoring system comprises a voltage-monitoring system or a temperature-monitoring system, or both.

Preferably, the voltage-monitoring system provides a signal to the control system in response to the voltage of the battery cells. Suitably, the control system removes power to the motor in response to the signal from the voltage-monitoring system falling below a predetermined level.

Preferably, the temperature-monitoring system provides a signal to the control system in response to the temperature of battery cells in the unit. Suitably, the control system removes power to the motor in response to the signal from the temperature-monitoring system exceeding a predetermined level.

Suitably, the lawn care apparatus further comprises a working height adjustment mechanism. Preferably, the working height adjustment mechanism comprises a limiter to limit the working height of the element. Optionally, the limiter is movable between a limiting position and a non-limiting position.

Preferably, the apparatus further comprises a battery cover latching means.

Preferably, the apparatus further comprises battery unit latching means. Preferably, the battery unit latching means is pivotally mounted on the apparatus. Suitably, the battery unit latching means further comprises a retractable catch engageable with the battery unit through rotation about the pivotal mount. Preferably, the battery unit further comprises at least one detent for engagement with the retractable catch of the battery unit latching means. Preferably, the at least one detent is located on the underside of the battery unit.

Advantageously, the battery cover latching means and battery unit latching means are operatively connected. Preferably, the battery unit latching means is operatively biased with the battery cover latching means. Alternatively, the cover latching means and battery unit latching means function independently.

Preferably, the battery unit further comprises a spring-loading means. Preferably, the spring-loading means provides a rapid and positive electrical disconnection from the lawn care apparatus.

Suitably, the spring-loading means is compressed during operative connection of the battery unit as a result of the engagement of the retractable catch of the battery unit latching means with the at least one detent formed in the underside of battery unit. Preferably, the spring-loading means automatically disconnects the battery unit from the lawn care apparatus by a small distance when the battery cover is opened and the battery unit latching means is disengaged.

Preferably, the battery unit is connectable to the lawn-care apparatus by manually sliding the battery unit into a position such that the at least one detent on the underside latchingly engages with the catch of the battery unit latching means. Preferably, latching engagement of the at least one detent with the catch positions the battery unit such that an electrical connection is established.

The lawn care apparatus may also comprise a rotatable cutting element having a regenerative braking system associated with the rotatable cutting element.

Suitably, the lawn care apparatus further comprises a regenerative braking system associated with the cutting element.
Suitably, the regenerative braking system comprises an inverter mode, in which electrical energy is transmittable to the motor from the power source, and a booster mode, in which electrical energy resulting from the rotation of the cutting element is fed-back to and is storable in the power source.
Preferably, the regenerative braking system is driven by the cutting element.
The above and other aspects of the present invention will now be illustrated in further details by way of example only, with reference to the accompanying drawings in which:
- Figure 1: is a perspective view of the body of a vegetation cutting apparatus in accordance with an embodiment of the first aspect of the present invention in the form of a lawnmower.
- Figure 2: is a perspective view of the embodiment of Figure 1 with its battery unit cover raised;
- Figure 3: is a sectional side view of the embodiment of Figure 2;
- Figure 4: is a part sectional side view of a battery unit latching means according to the present invention in which the battery unit is connected to the mower and the battery cover is closed;
- Figure 5: is a detailed view of the latching means of Figure 4 in which the latching means are positioned to release the battery cover;
- Figure 6: is a detailed view of the latching means of Figure 4 in which the battery cover is in an open configuration and the latching means is configured to release the battery unit;
- Figure 7: is a detailed view of the latching means of Figure 4 in which the latching means has been released to allow the battery to be removed from the battery housing;
- Figures 8A-C: are side views of the latching means of Figure 5;
- Figure 9: is a graph showing comparative efficiency and speed ranges of a DC motor and an EC motor used in accordance with the present invention; and
- Figure 10: is a circuit diagram of the control circuit of an EC motor used in accordance with the present invention;
- Figure 11: is a partial view of the circuit diagram of Figure 10; and
- Figure 12A&B: is a schematic illustrating the energy flow in an alternative control circuit for an EC motor used in accordance with the present invention.

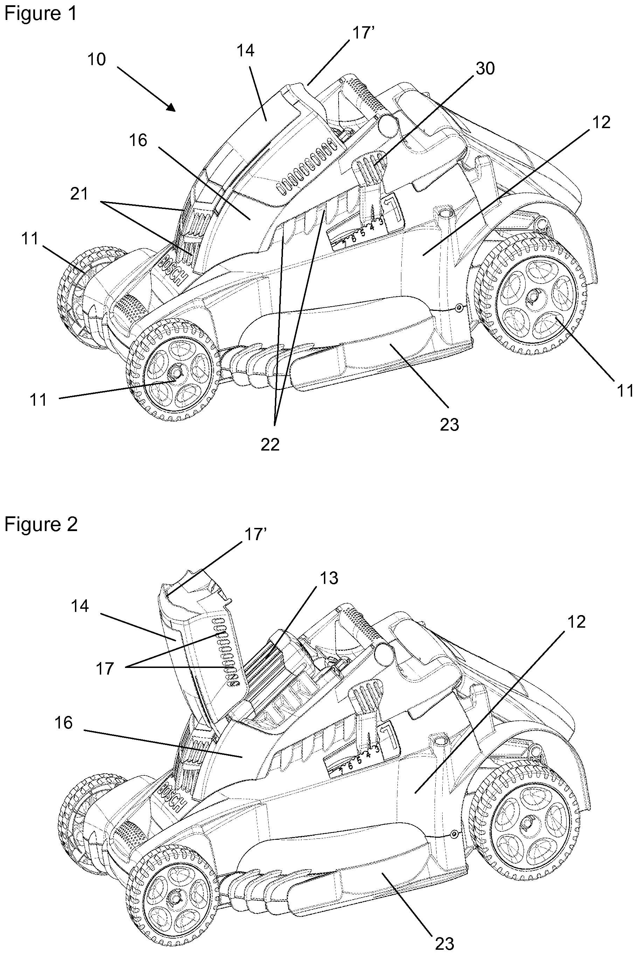

Referring to Figures 1 to 8, there is shown a lawn care apparatus in the form of a lawnmower 10 having a chassis and deck 23 upon which are mounted axles (not shown) carrying wheels 11, a deck cover 12 and a motor cover 16. For clarity, only the essential components for an understanding of the present invention are illustrated and specifically described. The remainder of the apparatus will be understood by the skilled person as being conventional. In particular, the illustrated apparatus is a lawnmower of the type known as a 'rotary mower' in which an electric motor rotates a cutting element about a vertical axis by a direct drive assembly in which the cutting element is mounted on the motor drive shaft. Indirect drive mechanisms are also known. Such an apparatus also includes a handle for manoeuvring it over the ground, and usually a grass box to collect grass clippings. Alternatively, the cutting element may be of the cylindrical type in a cylinder mower, or the apparatus may be a lawn rake or scarifier in which a plurality of tines are mounted for rotation on a generally cylindrical body. In accordance with the present invention, in all these cases, the apparatus includes an electronically commutated (EC) motor, preferably in conjunction with a lithium-ion battery.

The deck and motor covers 12 and 16, respectively, of lawnmower 10 are mounted on an upper surface of deck 23 and slope generally upwardly from the front to the rear of lawnmower 10, as defined by the direction in which the apparatus is moved by the user in use. Motor cover 16 further comprises a compartment for housing a battery unit 13, provided in an upper surface of, and formed with or as a component of, motor cover 16. The compartment comprises a battery cover 14, pivotally attached to, and latchingly engageable with, motor cover 16. In the embodiment shown, battery cover 14 is hingedly attached to motor cover 16 such that battery cover 14 is openable to provide rearward access to the compartment and battery unit 13. Alternative opening arrangements will be readily contemplated by the skilled person.

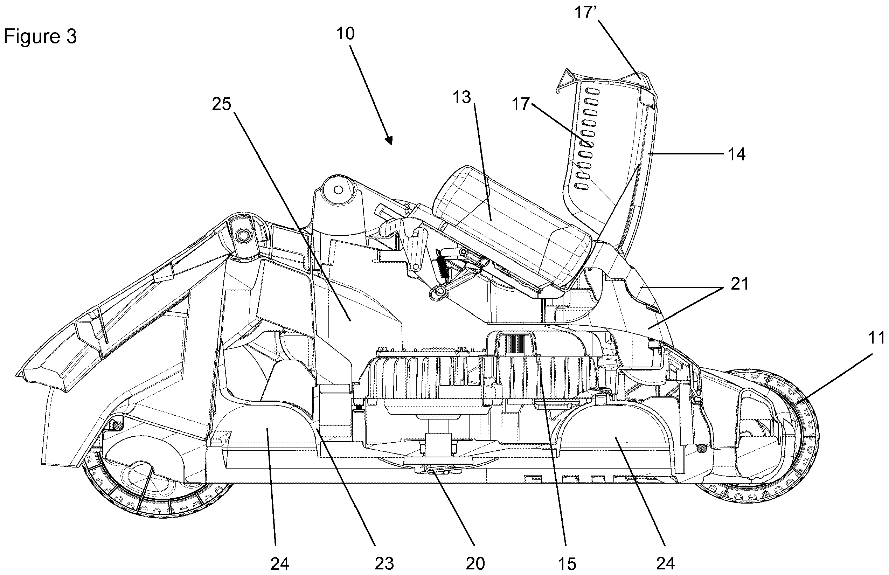

Figure 3, is a sectional side view of lawnmower 10 with battery cover 14 in an opened configuration. The lawnmower deck 23 includes a cutting bowl 24 on the underside thereof in which is mounted a cutting element 20. An electronically commutated motor (EC) 15 is located on an upper surface of deck 23 and is secured thereto, above cutting element 20, between front and rear wheels 11 and within deck cover 12. Cutting element 20 is driveable by EC motor 15 by means of a drive shaft which passes through an aperture in deck 23.

Motor cover 16 further includes front and side air vents 21 and 22, respectively (most clearly shown in Figures 1 and 2). In use, EC motor 15 and battery unit 13 generate heat, and without cooling each could overheat and suffer potentially irreparable damage. Accordingly, vents 21, 22 are provided to allow cooling air to be drawn past EC motor 15 during operation, and discharged into a low-pressure area at the centre of cutting bowl 24. Airflow paths (not shown) are also provided from the battery compartment into the motor area to cool battery unit 13. In addition, ambient airflow into battery compartment occurs via slots 17 and 17' in battery cover 14 which also allow convection air to pass through the battery compartment in the event that the product is left in sunlight when greenhouse effects would otherwise cause unacceptable heating.

Lawnmower 10 also includes a grass discharge chute 25 in communication with cutting bowl 24 at an inlet end, and forming an outlet end in a rear surface of the lawnmower 10 against which outlet, in use, an inlet for a grass box (not shown) is supported. The lawnmower further includes a height of cut adjustment arrangement working on axles (not shown) of wheels 11 through a lever 30 (Figure 1). In use, the height of cut mechanism will be restricted from engaging the lowest height settings, by means of a removable limiter clip (not shown), since cutting at these lowest settings results in a disproportionately higher power consumption in comparison with the other height settings. A user can access the lowest height settings by simply removing the limiter clip, but will suffer from a reduced area cut per battery charge as a result.

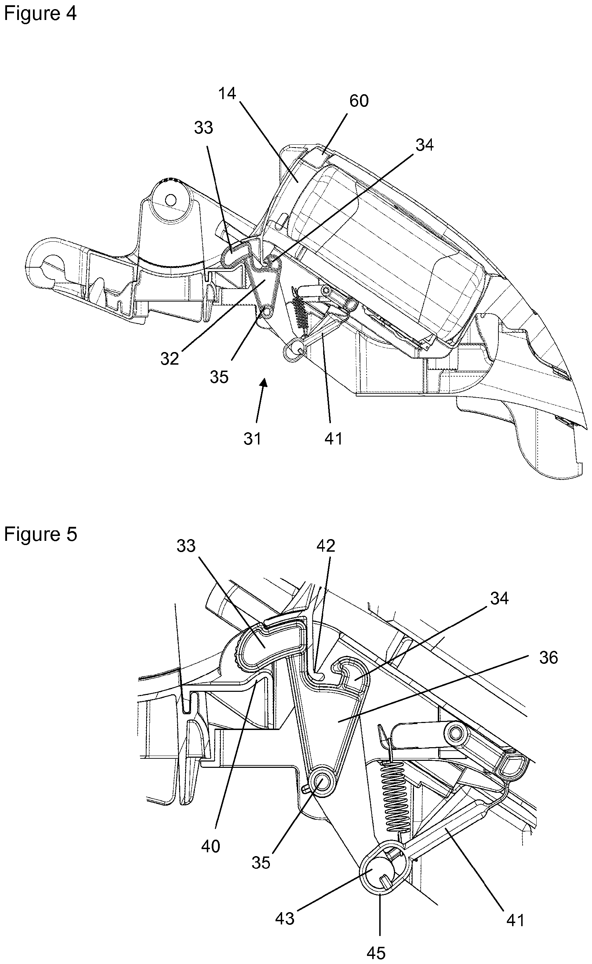

In preferred embodiments, battery unit 13 is removable for charging, and may be used in conjunction with a second battery unit to allow a user to work large areas by interchanging discharged and charged battery units. Referring to Figures 4 to 8, there is shown a latching means 31 for latchingly engaging battery unit 13 and motor cover 16 with the apparatus. Latching means 31 comprises a two-stage latch mechanism for firstly engaging with battery cover 14 and secondly battery unit 13, and comprises a primary latch 32 having an elongate dog-legged body 36 mounted on a rotatable pivot 35, and a secondary latch 41. Body 36 of primary latch 32 further comprises a catch 34 in the form of a hook, intermediate said pivot 35 and a first end of body 36, and a distal arm 33 adjacent catch 34 and towards the first end of body 36. As best seen in Figure 5, in use, major arm 33 is moveable within a void formed between motor cover 16 and battery cover 14, and is spring-loaded against protruding rim 40 of motor cover 16.

When battery cover 14 is in a closed configuration, as shown in Figures 4 & 5, it serves to limit the movement of distal arm 33 within said void. Catch 34 is latchingly engageable with an inwardly projecting rim or lip 42 of battery cover 14, and facilitates the retention of battery cover 14 against motor cover 16 in an engaged configuration.

The second end of elongate body 36 is formed with a pin 43 which is axially aligned with pivot 35.

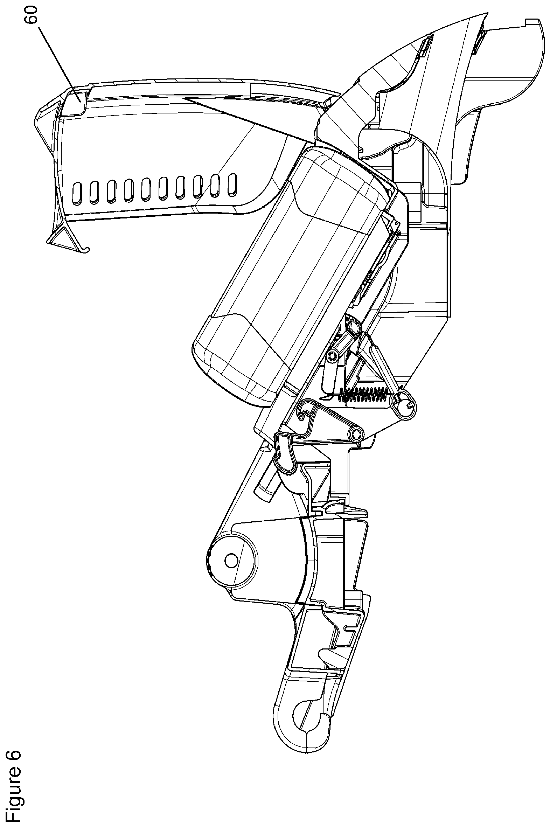

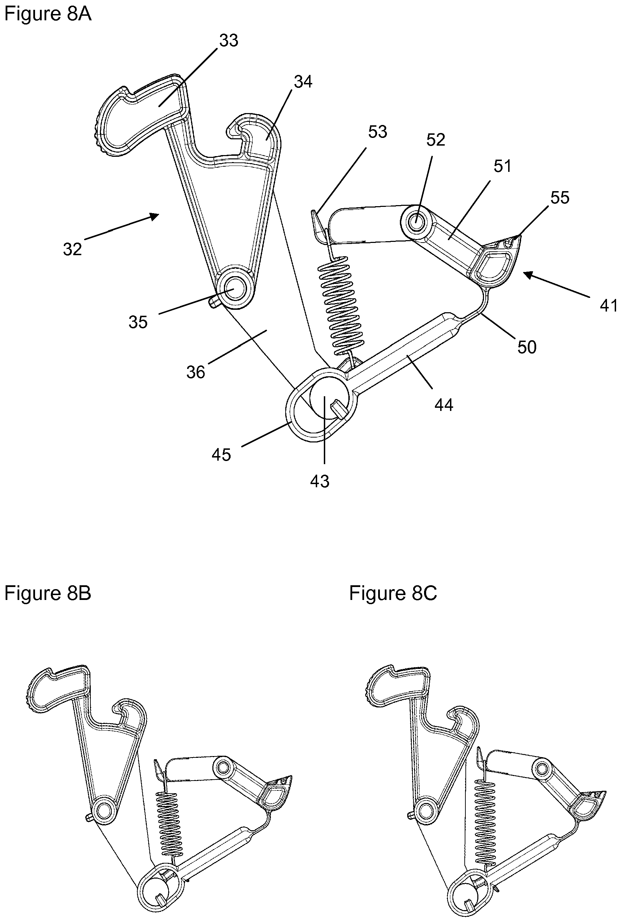

As described above, latching means 31 comprises a two-stage latch mechanism and comprises a secondary latch 41. Whilst primary latch 32 is principally concerned with a latching engagement with battery cover 14, secondary latch 41 is concerned with a latchable engagement with battery unit 13. Referring to Figures 6 to 8, particularly Figures 8A-C, secondary latch 41 comprises a first elongate member 44, having an elongated connecting slot 45 at one end thereof, and a flexible elbow 50 at its opposite end, flexible elbow 50 linking the first elongate member 44 to a second elongate member 51.

Second elongate member 51 further comprises a hook 53 at its distal end and a pivotable elbow 52, intermediate said hook 53 and said flexible elbow 50. Second elongate member 51 is pivotally mounted on motor cover 16 by means of pivotable elbow 52, and is biased by a spring 54, connected at one end to hook 53 and at its other to body 36.

Additionally, second elongate member 51 further comprises a battery unit lock 55 in the form of a projection which, as is more clearly shown in Figures 4 and 5, passes through an aperture in the base of the battery compartment and latchingly engages with battery unit 13.

In use, primary latch 32 is spring-loaded about pivot 35 and moveable between at least a first position in which distal arm 33 abuts against protruding rim 40 and catch 34 is engaged with lip 42 of battery cover 14 (Figure 4), and at least a second position in which distal arm 33 is remote from protruding rim 40, and catch 34 is disengaged from lip 42 of battery cover 14 (Figure 6). In the at least first position, shown in Figure 4 and depicted in isolation in Figure 8A, battery cover 14 is locked against motor cover 16 and battery unit is latched and operatively connected. In an intermediate position, illustrated in Figure 5, catch 34 is disengaged from lip 42 such that battery cover 14 is openable, and distal arm 33 abuts against battery cover 14. In the at least second position, depicted in Figure 6, battery cover 14 has been opened to allow access to battery unit 13. As a result, the primary latch 32 is further moveable about pivot 35, and is thereby engageable with secondary latch 41 to facilitate the disengagement of battery unit 13.

As further illustrated in Figure 5, with battery cover 14 in a closed position, the presence of cover 14 prevents further travel of the latch and hence disengagement of battery unit 13.

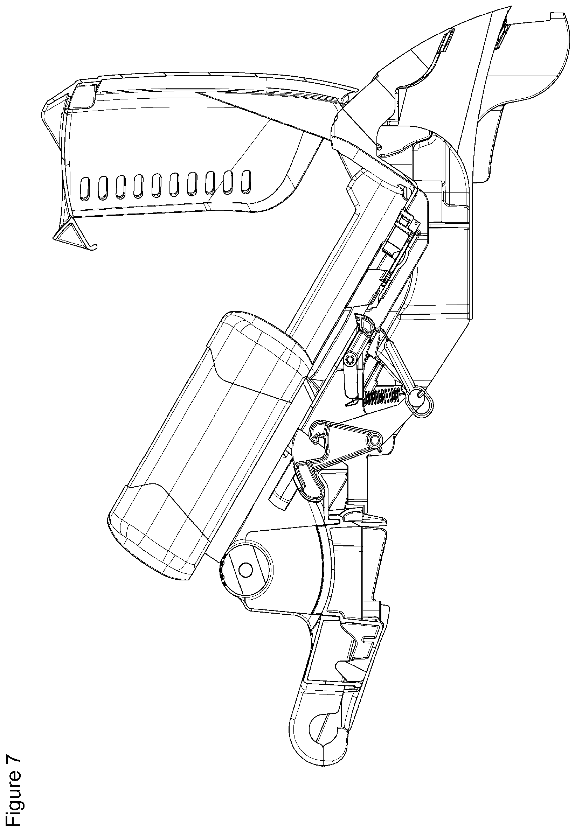

Furthermore, Figures 8A-C sequentially illustrate latching-means 31, in isolation, in its movement through first, intermediate and second positions, respectively. As depicted in Figures 8A and B, movement to the intermediate position, between the at least first and second positions and in which the battery cover is in a closed position, causes pin 43 to move within elongated connecting slot 45 and abut against a portion of elongated connecting slot 45 which is most distant from flexible elbow 50. In this configuration, catch 34 is no longer engaged with the battery cover 14 which may be fully opened as a result. With battery cover 14 in an opened position, latching means 31 is further moveable, by an operator-applied force, towards the at least second position and this further movement, as shown in Figures 6 and 8C, causes secondary latch 41 to move between a locked position, in which battery unit lock 55 is latchingly engaged with battery unit 13, and an unlocked position in which battery unit 13 is removable from the battery compartment. When the latches are released, latching means 31 is to returned to its default position shown in Figures 7 and 8A.

In preferred embodiments, a series of grooves or ribs in the base of battery unit 13 and a set of complementary ribs or grooves in the battery compartment provide a slidable engagement means. This arrangement enables battery unit 13 to be slid in and out of the battery compartment and correctly aligned with the latching and for electrical connection with the mower. Additionally, battery unit 13 further includes a built in spring-loading means (not shown) to ensure a rapid and positive disconnection from motor 15, this arrangement minimises the potential risk of contact arcing. The built in spring-loading means is compressed during operative connection of the battery unit as a result of the engagement of battery unit lock 55 with detents formed in the underside of battery unit 13. Consequently, battery unit 13 automatically disconnects from the product by a small distance when battery cover 14 is opened and the primary latch is moved to its second position, as illustrated in Figure 6.

As illustrated in Figure 7, battery unit 13 is in a position in which it is almost fully removed from its mounting within the battery compartment. When the latches have been released battery unit 13 is reconnected by manually sliding it into position so that the detents on its underside latchingly engage with the battery unit lock 55 to retain it in position. In doing so, battery unit 13 is pressed home against the built-in spring loading means and automatically makes an electrical connection with the lawnmower. Subsequently, battery cover 14, when released, will automatically fall closed by gravity and spring loading and can then be readily latched closed.

In addition, an internal flange 60 of the battery cover 14 prevents closure of the battery cover in the event that the battery unit is not correctly latched in position.

This arrangement provides an indication to the user that the battery unit is not operatively connected.

An EC motor, as preferably utilised in the present invention, includes a rotating armature having a plurality of alternately arranged North-South permanent magnetic poles around its circumference. The motor further comprises a stator comprising a plurality of electromagnetic coils. When the motor is actuated, the armature rotates inside the stator and magnetic North or South poles are generated in the stator coils, depending on the current flowing through them. The motor additionally comprises a series of detectors which provide electronic phase information on the angular position of the armature. According to this information, the direction and magnitude of the current flow in the stator coils is modulated, by electronic switching means, for example, a field-effect transistor such as a MOSFET.

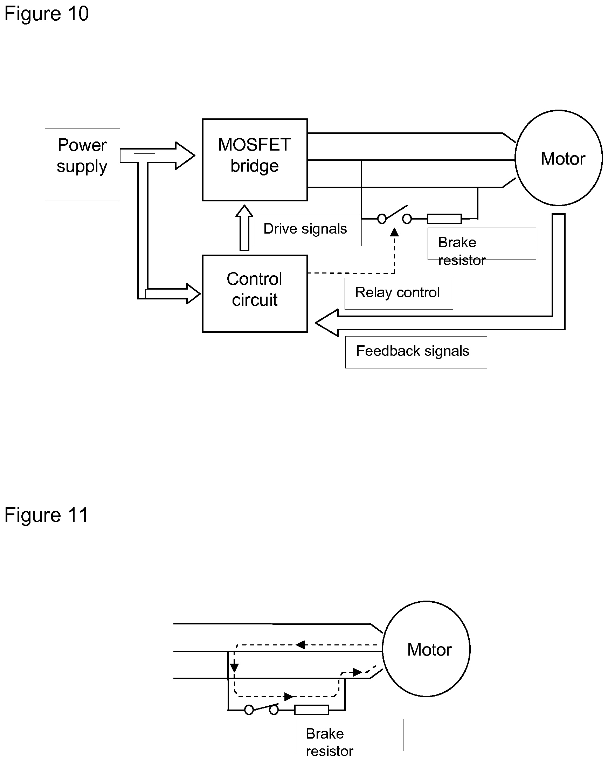

As illustrated in Figures 10 and 11, when the product is switched off, a secondary circuit provides a short circuit across at least one of the coils thereby creating a generator effect which provides a simple and reliable brake for the mower blade, as is required by safety standards. This secondary circuit could be provided by means of a mechanical relay or directly by means of a user operated switch, preferably on the handle. The addition of resistance in the circuit provides additional control over the stopping rate. Preferably this is set at between two and three seconds.

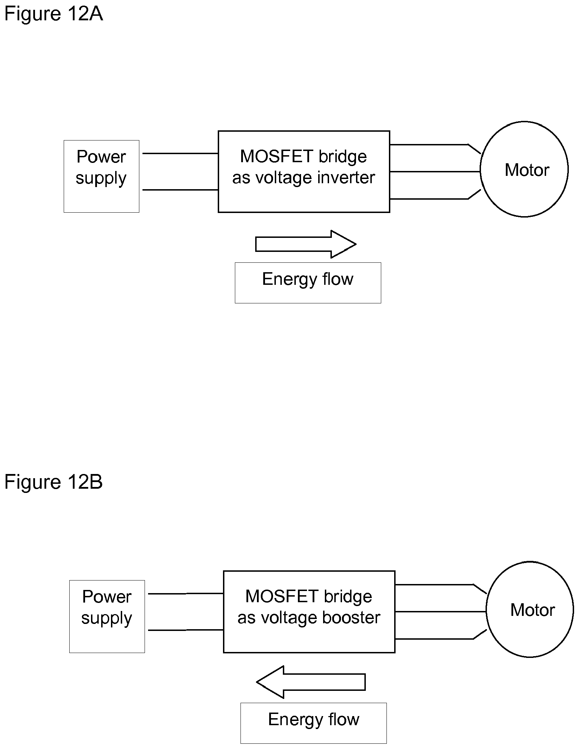

In alternative embodiments (shown in Figures 12A and 12B), the control circuit further comprises an energy feedback or regenerative braking system. In this alternative system every time the power to the motor is cut, the drive signal for the field-effect transistor or MOSFET bridge is switched from an inverter mode to a booster mode, and the energy stored in the motor is fed-back to the power supply. In preferred embodiments, the power supply is a battery.

As a result of the use of an EC motor, higher levels of efficiency than those associated with conventional DC motors are achievable. This is because the switching loses associated with the brush gear of a DC motor, and the mechanical drag, are avoided. In addition, the loss in efficiency which results from aerodynamic drag of the armature is reduced as a consequence of the smaller armature size requirements of the EC motor. The described efficiency is available over a wider range of speeds due to pulse wave modulation switching parameters of the control electronics of the motor system.

Optionally, the apparatus includes a speed control system which adjusts switching parameters to provide a substantially constant speed, and efficiency is further enhanced by the use of higher voltages which lead to a decrease in the associated resistive losses. Typically, a 36-volt battery, comprising two sets of 10 x 3.6-volt lithium-ion cells, is used. The skilled person will readily contemplate batteries having alternative voltages and different cell arrangements.

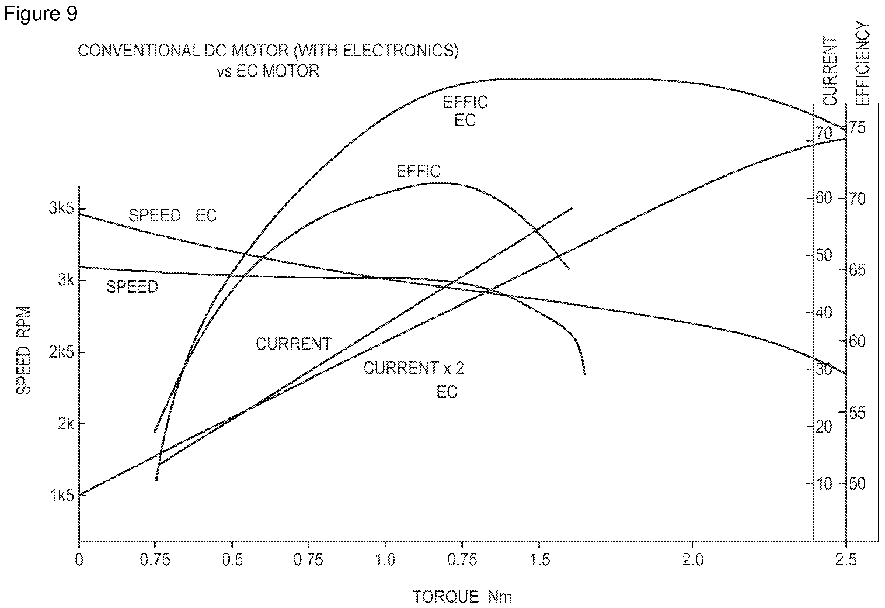

As illustrated in the graph of Figure 9, use of an electronically commutated (EC) motor provides an improvement in efficiency levels in comparison with those observed in conventional DC motors. In addition, and unlike conventional DC motors, an EC motor maintains its efficiency over a wide speed range. In a lawnmower, this increase in efficiency translates to an approximate 15% increase in the potential area cut per battery charge. The use of an electronically commutated motor also leads to a reduction in the overall weight of a mower, and because such motors are of a generally compact nature, the overall size of the mower can be reduced.

Lithium-ion batteries are low in weight in comparison with conventional batteries, and this leads to an increase in manoeuvrability of a battery-operated mower using lithium-ion batteries. These batteries also have a low charge time and typically can be recharged to around 80% capacity in thirty minutes and fully charged within one hour, unlike conventional lead-acid batteries which require up to twenty four hours to fully recharge. Accordingly, due to their rapid charge times, removable lithium-ion battery units can be utilised to allow a user to work large areas of garden with only minimal disruption being caused by interchanging charged and discharged battery units.

A further advantage of using lithium-ion batteries is that they do not suffer from self-discharge or "memory" effects, such as loss of full capacity when a battery is regularly only discharged to half capacity. An important consideration when using lithium-ion batteries is to ensure that they are not discharged below a certain threshold or used at too high a cell temperature, which could otherwise result in damage to the battery.

The battery unit will typically include a battery-unit condition monitoring system (not shown) to detect at least one operating parameter of the battery unit and provide a control signal, dependent upon the operating parameter, for a switching means. Suitable operating parameters include, but are not limited to, the cell temperature and the terminal voltage of the battery unit. The switching means controls the charging and discharging process of the battery unit and can be located within the battery itself or the EC motor. In preferred embodiments, the switching means is located in the EC motor, which has the effect of reducing heat development in the battery unit.

When using an EC motor, any additional monitoring circuitry can be readily incorporated with the electronics already present at only a small additional cost. In particular, the battery unit can be provided with a cell temperature and/or voltage monitoring system. Such monitoring systems would send signals to the control system which, in response, would cut the power to the motor to prevent damage to the cells.

An additional benefit of the use of an electronically commutated motor in conjunction with a lithium-ion battery is that very high peak powers are obtainable which enables a lawn care apparatus, in particular a lawnmower, so equipped to be used in tough cutting conditions.

## Claims

1. A lawn-care apparatus comprising a rotatable cutting element (20) driven by an electronically commutated motor (15), wherein the electronically commutated motor (15) is powered by a battery unit (13), wherein the apparatus further comprises a battery compartment having an openable battery cover (14), **characterised in that** the battery unit (13) comprises engagement means comprising a plurality of grooves or ribs for slidable engagement with a complementary engagement means provided in or on the battery compartment.

2. An apparatus as claimed in claim 1, wherein the battery cover (14) is hingedly attached to the lawn-care apparatus.

3. An apparatus as claimed in claim 1, wherein the battery unit (13) comprises a lithium-ion battery.

4. An apparatus as claimed in claim 1, wherein the apparatus further comprises a control system.

5. An apparatus as claimed in claim 4, wherein the control system comprises a speed control system, which includes a feedback system to drive the electronically commutated motor at a substantially constant speed.

6. An apparatus as claimed in claim 4, wherein the control system comprises a battery-unit-condition monitoring system comprising a voltage-monitoring system and/or a temperature-monitoring system.

7. An apparatus as claimed in claim 6, wherein monitoring circuitry of the battery-unit-condition monitoring system is incorporated together with the control system electronics.

8. An apparatus as claimed in claim 6, wherein the control system removes power to the motor (15) in response to a signal from the battery-unit-condition monitoring system.

9. An apparatus as claimed in claim 8, wherein the control system removes power to the motor in response to a signal from the voltage-monitoring system falling below a predetermined level and/or in response to the signal from the temperature-monitoring system exceeding a predetermined level.

10. An apparatus as claimed in claim 1, the apparatus further comprising battery cover (14) latching means (31) and battery unit (13) latching means (31) which are operatively connected.

11. An apparatus as claimed in claim 1, wherein the apparatus comprises a spring-loading means for rapid and positive electrical disconnection of the battery unit (13) from the lawn care apparatus and which automatically disconnects the battery unit (13) from the lawn care apparatus by a small distance when the battery cover (14) is opened and the battery unit (13) latching means (31) is disengaged.

12. An apparatus as claimed in claim 10, wherein the battery unit (13) is connected to the lawn-care apparatus by manually sliding the battery unit (13) into a position such that an at least one detent on its underside latchingly engages with the retractable catch of the battery unit (13) latching means (31).

13. An apparatus as claimed in claim 4 to 9, having electronic switching means for modulating the direction and magnitude of current flow in the stator coils of the electronically commutated motor according to electronic phase information on the angular position of the armature, provided by a series of detectors, which are comprised in the motor.

14. An apparatus as claimed in any one of the preceding claims, further comprising a regenerative braking system associated with the driven element.

15. An apparatus as claimed in claim 1, wherein the apparatus further comprises a control system comprising a speed control system, which includes a feedback system to drive the electronically commutated motor at a substantially constant speed and a battery-unit-condition monitoring system comprising a voltage-monitoring system and/or a temperature-monitoring system, wherein the monitoring circuitry of the battery-unit-condition monitoring system is incorporated together with the control system electronics.

## Patentansprüche

1. Rasenpflegevorrichtung, aufweisend ein drehbares Schneidelement (20), das durch einen elektronisch kommutierten Motor (15) angetrieben ist, wobei der elektronisch kommutierte Motor (15) durch eine Batterieeinheit (13) mit Leistung versorgt ist, wobei die Vorrichtung ferner ein Batteriefach mit einer öffenbaren Batterieabdeckung (14) umfasst, **dadurch gekennzeichnet, dass** die Batterieeinheit (13) Eingriffsmittel umfasst, die mehrere Kerben oder Rippen zum schiebbaren Eingriff mit komplementären Eingriffsmitteln, die in oder auf dem Batteriefach bereitgestellt sind, umfassen.

2. Vorrichtung nach Anspruch 1, wobei die Batterieabdeckung (14) mit Scharnieren an der Rasenpflegevorrichtung befestigt ist.

3. Vorrichtung nach Anspruch 1, wobei die Batterieeinheit (13) eine Lithiumionenbatterie aufweist.

4. Vorrichtung nach Anspruch 1, wobei die Vorrichtung ferner ein Steuersystem aufweist.

5. Vorrichtung nach Anspruch 4, wobei das Steuersystem ein Geschwindigkeitssteuersystem aufweist, das ein Rückmeldesystem aufweist, um den elektronisch kommutierten Motor bei im Wesentlichen konstanter Geschwindigkeit anzutreiben.

6. Vorrichtung nach Anspruch 4, wobei das Steuersystem ein Batterieeinheit-Zustandsüberwachungssystem aufweist, das ein Spannungsüberwachungssystem und/oder ein Temperaturüberwachungssystem aufweist.

7. Vorrichtung nach Anspruch 6, wobei eine Überwachungsschaltung des Batterieeinheit-Zustandsüberwachungssystems gemeinsam mit der Steuersystemelektronik eingebaut ist.

8. Vorrichtung nach Anspruch 6, wobei das Steuersystem in Antwort auf ein Signal vom Batterieeinheit-Zustandsüberwachungssystem Leistung vom Motor (15) abzieht.

9. Vorrichtung nach Anspruch 8, wobei das Steuersystem in Antwort darauf, dass ein Signal vom Spannungsüberwachungssystem unter eine vorbestimmte Schwelle fällt, oder in Antwort darauf, dass das Signal vom Temperaturüberwachungssystem eine vorbestimmte Schwelle überschreitet, Leistung vom Motor abzieht.

10. Vorrichtung nach Anspruch 1, wobei die Vorrichtung ferner Batterieabdeckung- (14) Verriegelungsmittel (31) und Batterieeinheit- (13) Verriegelungsmittel (31) aufweist, die betriebsbereit verbunden sind.

11. Vorrichtung nach Anspruch 1, wobei die Vorrichtung ein Federspannmittel zur raschen und positiven elektrischen Trennung der Batterieeinheit (13) von der Rasenpflegevorrichtung aufweist, und das automatisch die Batterieeinheit (13) von der Rasenpflegevorrichtung durch einen kleinen Abstand trennt, wenn die Batterieabdeckung (14) geöffnet ist und das Batterieeinheit- (13) Verriegelungsmittel (31) gelöst ist.

12. Vorrichtung nach Anspruch 10, wobei die Batterieeinheit (13) durch manuelles Schieben der Batterieeinheit (13) in eine Position derart, dass mindestens eine Arretierung auf ihrer Unterseite verriegelnd in die einziehbare Rastung der Batterieeinheits- (13) Verriegelungsmittel (31) eingreift, verbunden wird.

13. Vorrichtung nach Ansprüchen 4 bis 9 mit elektronischen Schaltmitteln zum Modulieren der Richtung und Magnitude eines Stromflusses in den Statorspulen des elektronisch kommutierten Motors gemäß elektronischen Phaseninformationen über die Winkelposition des Ankers, die durch eine Serie von Detektoren bereitgestellt werden, die im Motor aufgewiesen sind.

14. Vorrichtung nach einem der vorangehenden Ansprüche, ferner aufweisend ein regeneratives Bremssystem, das dem angetriebenen Element zugehörig ist.

15. Vorrichtung nach Anspruch 1, wobei die Vorrichtung ferner ein Steuersystem aufweist, das ein Geschwindigkeitssteuersystem aufweist, das ein Rückmeldesystem, um den elektronisch kommutierten Motor bei im Wesentlichen konstanter Geschwindigkeit anzutreiben, und ein Batterieeinheit-Zustandsüberwachungssystem, das ein Spannungsüberwachungssystem und/oder ein Temperaturüberwachungssystem aufweist, aufweist, wobei die Überwachungsschaltung des Batterieeinheit-Zustandsüberwachungssystems gemeinsam mit der Steuersystemelektronik eingebaut ist.

## Revendications

1. Appareil d'entretien de pelouse comprenant un élément coupant rotatif (20) entraîné par un moteur à commutation électronique (15), le moteur à commutation électronique (15) étant alimenté par une unité de batterie (13), l'appareil comprenant en outre un compartiment de batterie comportant un capot de batterie (14) pouvant être ouvert, **caractérisé en ce que** l'unité de batterie (13) comprend un moyen d'engagement comprenant une pluralité de rainures ou de nervures destinées à s'engager de manière coulissante avec un moyen d'engagement complémentaire prévu dans ou sur le compartiment de batterie.

2. Appareil selon la revendication 1, le capot de batterie (14) étant fixé de manière articulée à l'appareil d'entretien de pelouse.

3. Appareil selon la revendication 1, l'unité de batterie (13) comprenant une batterie à ions lithium.

4. Appareil selon la revendication 1, l'appareil comprenant en outre un système de commande.

5. Appareil selon la revendication 4, le système de commande comprenant un système de commande de vitesse qui inclut un système de rétroaction destiné à entraîner le moteur à commutation électronique à une vitesse sensiblement constante.

6. Appareil selon la revendication 4, le système de commande comprenant un système de surveillance de l'état de l'unité de batterie qui comprend un système de surveillance de la tension et/ou un système de surveillance de la température.

7. Appareil selon la revendication 6, le circuit de surveillance du système de surveillance de l'état de l'unité de batterie étant incorporé à l'électronique du système de commande.

8. Appareil selon la revendication 6, le système de commande coupant l'alimentation du moteur (15) en réponse à un signal du système de surveillance de l'état de l'unité de batterie.

9. Appareil selon la revendication 8, le système de commande coupant l'alimentation du moteur en réponse à un signal du système de surveillance de tension tombant au-dessous d'un niveau prédéterminé et/ou en réponse au signal du système de surveillance de température dépassant un niveau prédéterminé.

10. Appareil selon la revendication 1, comprenant en outre un moyen (31) de verrouillage du capot de batterie (14) et un moyen (31) de verrouillage de l'unité de batterie (13) qui sont fonctionnellement reliés.

11. Appareil selon la revendication 1, l'appareil comprenant un moyen de chargement par ressort qui est destiné à la déconnexion électrique rapide et positive de l'unité de batterie (13) de l'appareil d'entretien de pelouse et qui déconnecte automatiquement l'unité de batterie (13) de l'appareil d'entretien de pelouse par une petite distance lorsque le capot de batterie (14) est ouvert et que le moyen (31) de verrouillage de l'unité de batterie (13) est désengagé.

12. Appareil selon la revendication 10, l'unité de batterie (13) étant reliée à l'appareil d'entretien de pelouse par coulissement manuel de l'unité de batterie (13) jusque dans une position telle qu'au moins un goujon d'arrêt sur sa face inférieure s'engage par verrouillage avec le loquet escamotable du moyen (31) de verrouillage de l'unité de batterie (13).

13. Appareil selon la revendication 4 à 9, comportant un moyen de commutation électronique destiné à moduler la direction et l'intensité du courant dans les bobines de stator du moteur à commutation électronique en fonction d'informations de phase électronique sur la position angulaire de l'induit, lesquelles sont fournies par une série de détecteurs qui sont inclus dans le moteur.

14. Appareil selon l'une quelconque des revendications précédentes, comprenant en outre un système de freinage par récupération associé à l'élément entraîné.

15. Appareil selon la revendication 1, l'appareil comprenant en outre un système de commande qui comprend un système de commande de vitesse incluant un système de rétroaction destiné à entraîner le moteur à commutation électronique à une vitesse sensiblement constante et un système de surveillance de l'état de la batterie qui comprend un système de surveillance de la tension et/ou un système de surveillance de la température, le circuit de surveillance du système de surveillance de l'état de la batterie étant incorporé à l'électronique du système de commande.
